# EUROPÄISCHE PATENTANMELDUNG

(11) **EP 1 223 054 A1**
(43) Veröffentlichungstag der Anmeldung: **17.07.2002**
(21) Anmeldenummer: 02000431.3
(22) Anmeldetag: 08.01.2002
(51) Int. Cl.: B60C 11/12

(54) **Reifenlauffläche mit 3-D Lamellen**

(30) Priorität: 12.01.2001 DE 10101507
(71) Anmelder: Continental Aktiengesellschaft, 30165 Hannover (DE)
(72) Erfinder: Jagow, Frank, 81927 München (DE); Rodewald, Helmut, 31249 Rötzum (DE)

(57) **Zusammenfassung**

Fahrzeugreifen mit einer Lauffläche mit zumindest einem in der Draufsicht zickzack- oder wellenförmigen Einschnitt (10,12), der die Peripherie der Lauffläche schneidet und von periodisch ausgeführten Einschnittflächen (3,3',3",3"') begrenzt ist, wobei sich der Verlauf des Einschnittes (10,12) in zur Laufflächenperipherie parallelen Ebenen in Abhängigkeit vom Abstand zur Peripherie der Lauffläche ändert, wobei die den Einschnitt begrenzenden Flächen (3,3',3",3"') zumindest zum Teil eine Folge von mindestens zwei aufeinander folgenden Ausschnitten von Mantelflächen spitzer Körper ist,
wobei die Orientierung der Scheitel von Ausschnitt (4,6,4',6',7,7') zu Ausschnitt (4,6,4',6',7,7') abwechselt,
und wobei die Ausschnitte (4,6,4',6',7,7') nahtlos aneinander anschließen.

## Beschreibung

Die Erfindung betrifft einen Fahrzeugreifen mit einer Lauffläche mit zumindest einem in der Draufsicht zickzack- oder wellenförmig verlaufenden Einschnitt, der die Peripherie der Lauffläche schneidet und von periodisch ausgeführten Einschnittflächen begrenzt ist, wobei sich der Verlauf des Einschnittes in zur Laufflächenperipherie parallelen Ebenen in Abhängigkeit vom Abstand zur Peripherie ändert.

Fahrzeugreifen mit derartigen Einschnitten sind in verschiedenen Ausführungen bekannt. So befasst sich beispielsweise die EP-A 0 515 349 damit, Einschnitte in der Lauffläche eines Reifens so auszuführen, dass die die Einschnitte begrenzenden Wände ein Netzwerk bestehend aus vor- und rückspringenden Kanten und Flächen bildet. Bei anderen aus dieser Druckschrift bekannten Ausführungen werden die Wandbereiche aus bogenförmig verlaufenden Flächen zusammengesetzt. Das erwähnte Netzwerk hat den Vorteil, gegenseitige Abstützflächen zu bilden, die die Beweglichkeit des Profilblocks begrenzen, jedoch den Nachteil eines geringeren Öffnungsvermögens der Einschnitte. Gerade das Öffnungsvermögen ist für gute Traktions- und Bremseigenschaften auf Schnee wichtig. Bei den anderen erwähnten Varianten wird zwar das Öffnungsvermögen der Einschnitte zur Bildung von Griffkanten weniger eingeschränkt, dafür ist die gegenseitige Beweglichkeit der Einschnittswände etwas höher, was die Steifigkeit des Profilelements mit solchen Einschnitten reduziert, einen ungleichmäßigen Abrieb begünstigt und den Bremsweg auf trockenen Fahrbahnen erhöhen kann.

Solche Profilierungen bergen erhebliche Kerbwirkungen, was schon beim Entformen des Reifens aber auch bei harter Beanspruchung wie etwa beim Trockenbremsen zu Rissen führen kann und deshalb besonders rissbeständige Gummimischungen erfordert, die aber bedauerlicherweise in der Regel ein schlechteres Verhältnis zwischen Nassgriffigkeit und Rollwiderstand bieten. Zudem sind die Lamellenbleche, die solche Einschnitte bilden können, in Folge ihrer Komplexität schwierig herstellbar.

Der Erfindung liegt die **Aufgabe** zu Grunde, bei einem Reifen der eingangs genannten Art durch eine besondere Einschnittgestaltung ein Optimum in der Abstimmung von guten Bremseigenschaften auf trockenen Fahrbahnen und guten Griffeigenschaften unter winterlichen Fahrbedingungen zu erzielen.

**Gelöst** wird die gestellte Aufgabe erfindungsgemäß dadurch, dass die den Einschnitt begrenzende Fläche zumindest zum Teil eine Folge von mindestens zwei aufeinander folgenden Ausschnitten von Mantelflächen spitzer Körper ist, wobei die Orientierung der Scheitel von Ausschnitt zu Ausschnitt abwechselt, und wobei die Ausschnitte nahtlos aneinander anschließen. Das Wort "nahtlos" ist hier als gleichbedeutend mit "versatzfrei" oder "stetig" zu verstehen.

Die abwechselnde Orientierung der Scheitel oder Spitzen schafft gegenseitige Abstützmöglichkeiten für die beiden sich gegenüberliegenden Einschnittsflächen. Dies begrenzt die Verformung des eingeschnittenen Positives, wobei dieser Stabilisierungseffekt auch mit fortschreitendem Abrieb erhalten bleibt.
Erfindungsgemäß ausgeführte Einschnitte können auf Profiltiefe ausgeführt werden, ohne diesen Effekt einzubüßen. Damit bleiben auch die Griffkanten erhalten. Durch die Auswahl des spitzen Körpers oder der spitzen Körper, von denen Mantelflächenausschnitte verwendet wurden, kann ferner auf das Öffnungsvermögen der Einschnitte unter unterschiedlichen Beanspruchungen - beim Anfahren, Bremsen, bei gerader Fahrt oder beim Kurvenfahren - Einfluss genommen werden.

Bei einer bevorzugten Ausführungsform der Erfindung ist zumindest einer der Ausschnitte ein Ausschnitt aus der Mantelfläche eines solchen spitzen Körpers, der aus der Verbindung jedes Punktes der Umrisslinie einer ebenen Grundfläche mit einem Scheitelpunkt außerhalb der Ebene der Grundfläche darstellbar ist, wobei der Radius der Umrisslinie der Grundfläche periodisch ist mit einer Periodenlänge von höchstens 180°, wobei der Scheitel sich zweckmäßigerweise auf einer zur Ebene der Grundfläche senkrechten Geraden durch den Pol befindet. Solche Kurven lassen sich am besten in Polarkoordinaten darstellen. Abgesehen von der notwendigen Ablängung der so geschaffenen Mantelfläche in Umfangsrichtung wird zweckmäßigerweise die Mantelfläche auch in der Höhe beschnitten, was sich auch als Abstumpfung des die Mantelfläche erzeugenden Körpers auffassen lässt, und zwar zweckmäßigerweise entlang einer zur Grundfläche parallelen Ebene. Bei dieser Auffassung wird also der Scheitel (= Spitze) des erzeugenden Körpers weggeschnitten. Damit lässt sich eine ganze Klasse von Ausschnitten erstellen, die aneinander nicht nur versatzfrei, sondern auch knickfrei anschließen.

Zu den einfacher herstellbaren Ausschnitten aus dieser Klasse von Ausschnitten gehören jene, die Ausschnitte aus der Mantelfläche eines Kegels sind, welcher als Leitkurve - also der Umrisslinie der ebenen Grundfläche - einen Kreis oder eine Ellipse aufweisen kann.

Bei einer weiteren Ausführungsform der Erfindung ist zumindest einer der Ausschnitte ein Ausschnitt aus einer Mantelfläche einer Pyramide. Ausschnitte aus Mantelflächen von Pyramiden bilden eine weitere Klasse von Ausführungsvarianten der Erfindung, die den Vorteil bieten, dass sie im Verhältnis zur Einschnittamplitude größere Oberflächen bilden, also noch etwas wirksamer sind, allerdings unter Inkaufnahme einer auch etwas höheren Kerbwirkung.

Ein derartiger Ausschnitt aus der Mantelfläche einer Pyramide ist durch diagonales Teilen eines Pyramidenstumpfes darstellbar oder auch durch nicht diagonales Teilen. Im letzten Falle ist beispielsweise ein solcher Ausschnitt durch Abschneiden eines Pyramidenteiles parallel zu einer Kante der Grundfläche bildbar.

Es kann jedoch auch der über die Einschnitte erzielbare Stabilisierungseffekt in bestimmten Profilelementbereichen größer oder kleiner gemacht sein als in anderen. Dies lässt sich durch eine entsprechende Wahl von Ausschnitten aus den Mantelflächen spitzer Körper erzielen, indem beispielsweise diese Ausschnitte von verschiedenartigen Körpern stammen.

Die Ausschnitte aus den Mantelflächen verschiedener Körper können dabei abwechselnd aufeinander folgen, sodass beispielsweise keine gleichen oder gleichartigen Ausschnitte unmittelbar aufeinander folgen.

Auch bei diesen Ausführungen ist eine gleichmäßige Stabilisierung des Profilelements erzielbar, wenn die Scheitelwinkel der den Ausschnitten zu Grunde liegenden spitzen Körper an den Stoßlinien, also den Fügestellen der Ausschnitte, übereinstimmen.

Weitere Merkmale, Vorteile und Einzelheiten der Erfindung werden nun anhand der Zeichnung, die schematisch einige Ausführungsbeispiele darstellt, näher beschrieben. Dabei zeigen
- Fig. 1: eine Draufsicht auf eine Teilabwicklung einer Lauffläche eines Fahrzeugreifens,
- Fig. 2: eine Schrägansicht eines Teiles eines Profilblockes aus Fig. 1, welcher entlang eines Einschnittes durchtrennt dargestellt ist,
- Fig. 3 bis Fig. 5: in zu Fig. 2 analogen Darstellungen weitere Ausführungsformen der Erfindung und
- Fig. 6 und 6a: eine prinzipielle Möglichkeit der Darstellung einer Variante des Einschnittes aus Fig. 5.

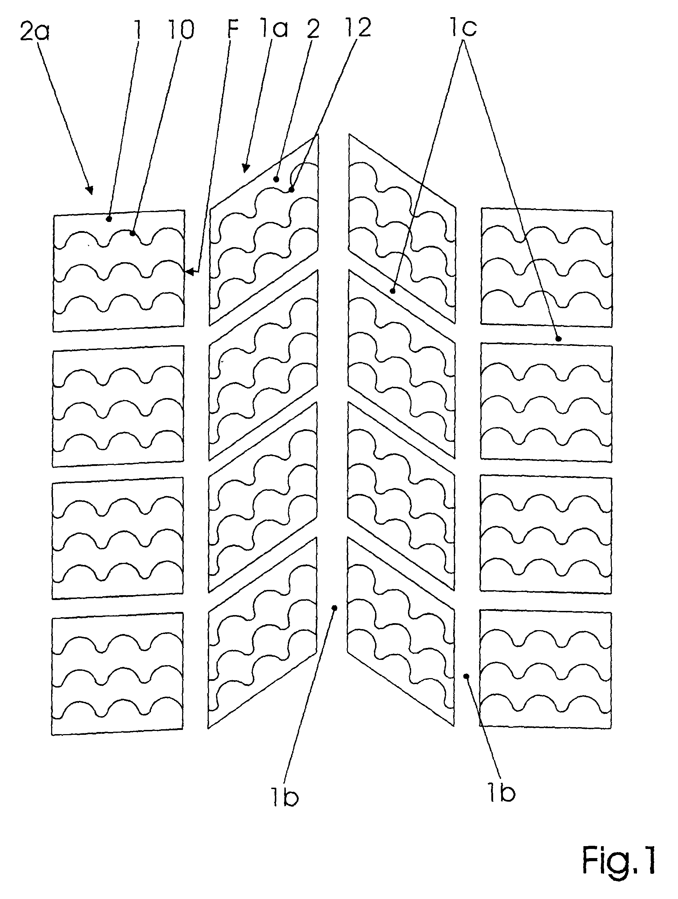

Die **Fig. 1** beispielhaft gezeigte Lauffläche eines Fahrzeugreifens weist ein Profil auf, weist ein Profil auf, welches aus Profilblöcken 1, 2 besteht, die innerhalb von vier in Umfangsrichtung umlaufenden Blockreihen, zwei mittleren Blockreihen 1a und zwei Schulterblockreihen 2a, angeordnet sind. Die Blockreihen 1a, 2a sind voneinander durch Umfangsnuten 1b getrennt, die Blöcke 1, 2 innerhalb der Blockreihen 1a, 1b sind in Umfangsrichtung durch Quernuten 1c voneinander getrennt. Jeder Profilblock 1, 2 ist mit einer Anzahl von Einschnitten 10, 12 versehen, deren Breite der für Einschnitte üblichen Breite von 0,4 bis 0,6 mm entsprechen kann. Sämtliche Einschnitte 10, 12 sind wellenförmig verlaufende Einschnitte.

Gemäß der Erfindung sind Einschnitte in der Lauffläche eines Reifens auf besondere Weise so ausgeführt, dass sich ihr Verlauf in zur Laufflächenperipherie parallelen Ebenen in Abhängigkeit vom Abstand zur Peripherie der Lauffläche ändert. Dabei wird bei sämtlichen Ausführungsbeispielen jeweils eine der den Einschnitt begrenzenden Flächen beschrieben, die zweite Fläche ist übereinstimmend ausgeführt und befindet sich in einem Abstand von der dargestellten Fläche, welcher der Einschnittbreite entspricht.

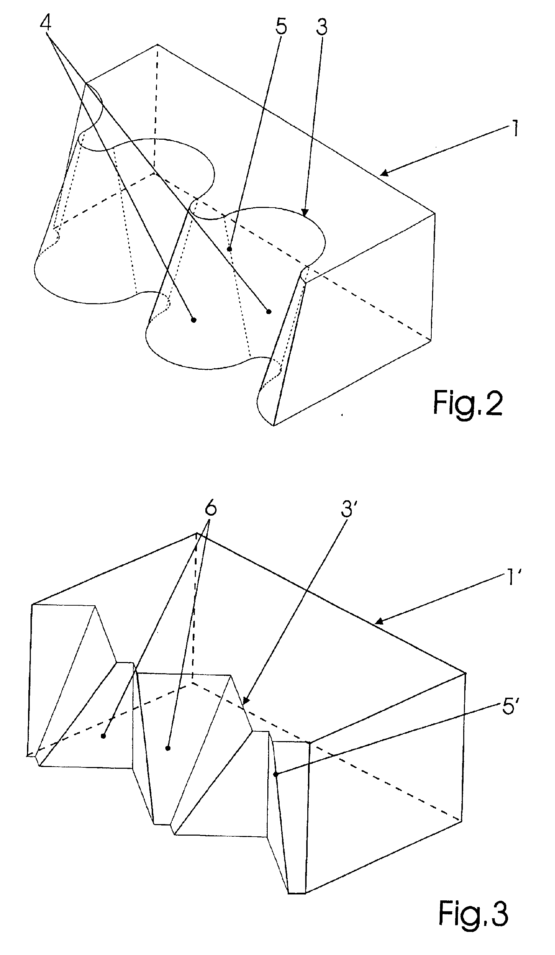

**Fig. 2** zeigt anhand der Ansicht eines entlang eines Einschnittes 10 durchtrennten Profilblockes 1 (siehe Pfeil F in Fig. 1) eine Ausführungsvariante der Erfindung. Die dargestellte Einschnittfläche 3 setzt sich aus einer unmittelbaren Aufeinanderfolge einer Anzahl von gleichen Ausschnitten 4 aus einer Mantelfläche eines als Leitkurve einen Kreis aufweisenden Kegelstumpfes zusammen, wobei die Spitzen der zu Grunde liegende Kegel abwechselnd in entgegengesetzte Richtungen orientiert sind. Bei der in Fig. 2 gezeigten Ausführungsform sind die Ausschnitte 4 der Mantelflächen halbe Mäntel des Kegelstumpfes. Die Stoßlinien 5 der nahtlos und somit unmittelbar sowie knickfrei aneinander anschließenden Ausschnitte 4 der Mantelflächen sind in Fig. 2 zum besseren Verständnis der Erfindung als strichlierte Linien eingezeichnet.

Bei der in Fig. 2 gezeigten Ausführungsform setzt sich die Einschnittfläche 3 aus einer Aufeinanderfolge von vier kompletten Ausschnitten 4 zusammen, an welche seitlich zu den betreffenden Blockseiten hin Teile von Ausschnitten 4 anschließen. Die Ausschnitte 4 der Mantelflächen können auch von Kegelstümpfen stammen, die als Leitkurven Ellipsen aufweisen und müssen nicht die Hälfte der Mantelfläche des betreffenden Kegelstumpfes einnehmen. Bevorzugt sind jedoch Ausführungsformen, wo die Ausschnitte der Mantelflächen gleich oder kleiner der Hälfte des Mantels eines Kegelstumpfes sind.

Wie Fig. 2 zeigt, ändert sich der Verlauf der Einschnittfläche 3 in Ebenen parallel zur Peripherie des Profilblocks 1 kontinuierlich, wobei jedoch die grundsätzliche Charakteristik eines wellenförmigen Einschnittes erhalten bleibt. Gemeinsam mit der übereinstimmend ausgebildeten, nicht dargestellten zweiten Einschnittfläche ist somit eine gute gegenseitige Abstützung von Bereichen der Einschnittflächen 3 bei auf den Profilblock 1 in Umfangsrichtung, in seitlicher Richtung oder schräger Richtung wirkenden Kräften möglich. Der Profilblock lässt sich daher in allen Richtungen gut stabilisieren, ohne dass die Fähigkeit der Einschnitte, sich zur Bildung von Griffkanten zu öffnen, beeinträchtigt wird.

Ausführungen, wo Ausschnitte von Mantelflächen von Kegelstümpfen Einschnittflächen gestalten, sind Spezialfälle einer Klasse von Ausschnitten von Mantelflächen abgestumpfter spitzer Körper, die im Folgenden näher beschrieben werden. Jeder dieser Körper ist darstellbar aus Verbindungslinien, die jeden Punkt der Umrisslinie einer ebenen Grundfläche mit einem als Scheitel bezeichenbaren Punkt außerhalb der Ebene der Grundfläche verbinden. Die Umrisslinie der Grundfläche ist in Polarkoordinaten periodisch mit einer Periodenlänge von höchstens 180°. Der Scheitel befindet sich auf einer zur Ebene der Grundfläche senkrechten Geraden durch den Pol. Die Abstumpfung dieses spitzen Basiskörpers erfolgt durch Wegschneiden eines den Scheitel einschließenden Teiles in einer Ebene parallel zur Ebene der Grundfläche.

Bei der in **Fig. 3** gezeigten Ausführungsform werden die beiden Einschnittflächen 3', von welchem durch die Teilung des Profilblocks 1' nur die eine zu sehen ist, durch eine unmittelbare Aufeinanderfolge einer Anzahl von übereinstimmenden Ausschnitten 6 einer Mantelfläche eines Pyramidenstumpfes gebildet. Jeder Ausschnitt 6 der Mantelfläche umfasst dabei zwei einander benachbarte Seitenflächen des Pyramidenstumpfes, welcher von einer regulären Pyramide, deren Grundfläche ein Quadrat ist, stammt. Die Orientierung der Spitzen der Pyramidenstümpfe wechselt bei unmittelbar aufeinander folgenden Ausschnitten 6 von Mantelflächen ab. Die in Fig. 3 etwas stärker eingezeichneten Linien 5' kennzeichnen die Position der jeweiligen Stoßlinien. Die derartige Einschnittflächen 3' aufweisenden Einschnitte sind grundsätzlich zickzackförmige Einschnitte, die ihren Verlauf in Ebenen parallel zur Peripherie des Blockes 1' ändern, indem, ausgehend von der Blockperipherie, die Zickzackform vorerst regelmäßiger wird, um in Richtung Einschnittgrund wieder einen Verlauf anzunehmen, bei dem ein Zickzack großer Amplitude mit einem Zickzack kleiner Amplitude abwechselt.

Erwähnt sei, dass es, in Abhängigkeit der gewählten Basispyramide(n) eine Vielzahl von Möglichkeiten gibt, Abwandlungen von der in Fig. 3 gezeigten Ausführung zu gestalten.

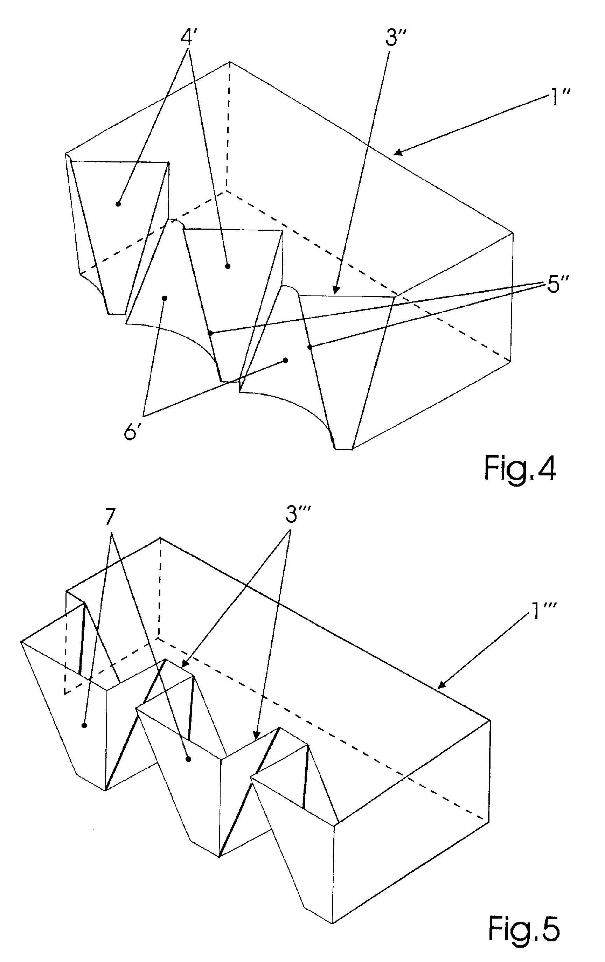

Gemäß der in **Fig. 4** gezeigten Ausführungsform werden die Einschnittflächen 3" eines Einschnittes in einem Profilblock 1" ebenfalls aus abwechselnd aufeinander folgenden Ausschnitten 4', 6' von Mantelflächen gebildet, wobei die Ausschnitte 4' von einem Kegelstumpf und die Ausschnitte 6' von einem Pyramidenstumpf stammen. Die Orientierung der Spitzen wechselt für unmittelbar aufeinander folgende Ausschnitte 4', 6' ebenfalls ab, sodass sämtliche Ausschnitte 6' des Pyramidenstumpfes und sämtliche Ausschnitte 4' des Kegelstumpfes jeweils in übereinstimmende Richtungen weisen, zueinander jedoch in entgegensetzte Richtungen orientiert sind. Bei der dargestellten Ausführungsform sind ferner sämtliche Ausschnitte 4' und sämtliche Ausschnitte 6' jeweils übereinstimmend ausgeführt und die abgestumpften spitzen Körper, von welchem diese Ausschnitte 4', 6' stammen, weisen an den Stoßlinien 5" übereinstimmend große Scheitelwinkel auf. Zu den Seitenflächen des Profilblocks 1" enden die Einschnittflächen 3" mit einem Teil der Ausschnitte 4' bzw. 6'.

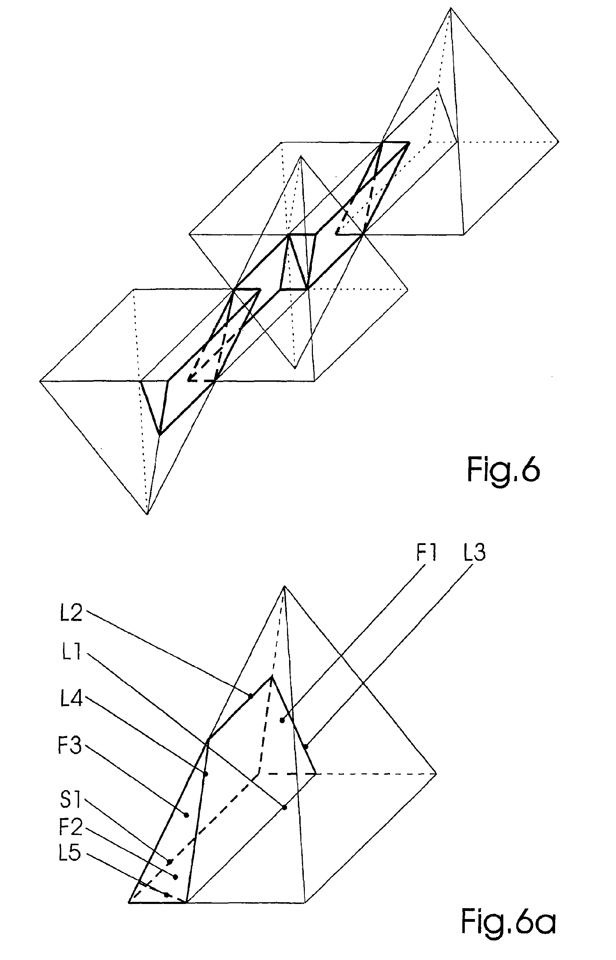

Auch bei der in **Fig. 5** gezeigten Ausführungsform eines Einschnittes in einem Profilblock 1"' wird die besondere Ausgestaltung der Einschnittflächen 3"', von welchen wieder nur die eine zu sehen ist, durch eine Aufeinanderfolge von abwechselnd in entgegengesetzten Richtungen orientierten gleichen Ausschnitten 7 der Mantelfläche einer abgestumpften Pyramide gebildet. **Fig. 6** und **Fig. 6a** veranschaulichen, auf welche Weise eine Aufeinanderfolge solcher Ausschnitte aus der Mantelfläche von Pyramiden darstellbar ist. Anhand von der in Fig. 6a gezeigten regulären Pyramide mit quadratischer Grundfläche wird ein einzelner Ausschnitt beschrieben. Die Grundfläche der Pyramide wird parallel zu einer Seite, die hier mit S1 bezeichnet ist, entlang der Linie L1 geschnitten. Die die Seite S1 einschließende Seitenfläche der Pyramide wird in beliebiger Höhe, aber unterhalb des Scheitels parallel zur Linie L1 entlang der Linie L2 geschnitten. Die Endpunkte der Linien L1 und L2 werden durch Linien L3 und L4 miteinander verbunden, die in der Figur rechts der Linien L3, L4 befindlichen Pyramidenteile sowie das Grundflächenteil werden entfernt. Es verbleiben die zusammenhängenden Flächen F1, F2 und F3, wobei F1 und F2 zwei gleich große Dreiecke sind und F3 ein gleichseitiges Trapez ist. Die Flächen F1, F2 und F3 bilden den betreffenden Ausschnitt 7' aus der Mantelfläche. Werden, wie Fig. 6 zeigt, mehrere dieser Ausschnitte 7' unter abwechselnder Spitzenorientierung zusammengefügt, indem jeweils zwei Dreieckflächen F1 bzw. F2 zu einem Parallelogramm ergänzt werden, ergibt sich eine erfindungsgemäße Einschnittfläche.

Fig. 5 zeigt dabei einen Sonderfall der anhand der Fig. 6 und 6a erläuterten Ausgestaltung, der dadurch darstellbar ist, dass aus der Pyramide in Fig. 6a Dreieckflächen geschnitten werden, deren eine Seitenkante jeweils entlang der strichlierten Linie L5 verläuft. Die in Fig. 6 veranschaulichte Einschnittausgestaltung ergibt Einschnitte, deren grundsätzliche Erstreckungsrichtung von der radialen Richtung etwas abweicht. Diese "Schrägstellung" von Einschnitten ist üblich und schon seit längerem bekannt. Der in Fig. 5 gezeigte Sonderfall ergibt einen Einschnitt mit radialer Erstreckungsrichtung.

Auch die in Fig. 6 gezeigten Ausgestaltungen von Einschnittflächen sind mögliche Varianten aus einer Vielzahl weiterer Ausführungsformen, die aus beliebigen Pyramidenformen darstellbar sind.

Selbstverständlich ist es auch möglich, nur Teile von Einschnittflächen erfindungsgemäß auszuführen. Die dargestellten und beschriebenen Varianten können dabei auf unterschiedliche Weise miteinander kombiniert werden.

Erfindungsgemäß ausgeführte Fahrzeugreifen können beispielsweise Reifen für Personenkraftwagen sein, deren Lauffläche eine Band- und/oder Blockstruktur aufweisen kann. Dabei können bei ein- und demselben Reifen auf unterschiedliche Weise ausgeführte Einschnitte, auch erfindungsgemäß ausgeführte mit herkömmlich ausgeführten Einschnitten, kombiniert sein.

## Patentansprüche

1. Fahrzeugreifen mit einer Lauffläche mit zumindest einem in der Draufsicht zickzack- oder wellenförmigen Einschnitt (10, 12), der die Peripherie der Lauffläche schneidet und von periodisch ausgeführten Einschnittsflächen (3, 3', 3", 3"') begrenzt ist, wobei sich der Verlauf des Einschnittes (10, 12) in zur Laufflächenperipherie parallelen Ebenen in Abhängigkeit vom Abstand zur Peripherie der Lauffläche ändert,
**dadurch gekennzeichnet, dass** die den Einschnitt begrenzenden Fläche zumindest zum Teil eine Folge von mindestens zwei aufeinander folgenden Ausschnitten von Mantelflächen (3, 3', 3", 3"') spitzer Körper ist, wobei die Orientierung der Schneitel von Ausschnitt (4, 6, 4', 6', 7; 7') zu Ausschnitt (4, 6, 4', 6', 7, 7') abwechselt, und wobei die Ausschnitte (4, 6, 4', 6', 7, 7') nahtlos aneinander anschließen.

2. Fahrzeugreifen nach Anspruch 1, **dadurch gekennzeichnet, dass** zumindest einer der Ausschnitte ein Ausschnitt (4, 4') aus der Mantelfläche eines solchen spitzen Körpers ist, der aus der Verbindung jedes Punktes der Umrisslinie einer ebenen Grundfläche mit einem Scheitelpunkt außerhalb der Ebene der Grundfläche darstellbar ist,
wobei die Umrisslinie der Grundfläche in Polarkoordinaten periodisch ist mit einer Periodenlänge von höchstens 180°.

3. Fahrzeugreifen nach Anspruch 1, **dadurch gekennzeichnet, dass** der Scheitel sich auf einer zur Ebene der Grundfläche senkrechten Geraden durch den Pol der Grundfläche befindet.

4. Fahrzeugreifen nach Anspruch 1, **dadurch gekennzeichnet, dass** die Abstumpfung durch Wegschneiden eines den Scheitel einschließenden Teils des Körpers entlang einer zur Grundfläche parallelen Ebene erfolgt ist.

5. Fahrzeugreifen nach einem der vorangehenden Ansprüche, **dadurch gekennzeichnet, dass** zumindest einer der Ausschnitte ein Ausschnitt (4, 4') einer Mantelfläche eines Kegelstumpfes ist.

6. Fahrzeugreifen nach Anspruch 5, **dadurch gekennzeichnet, dass** die Leitkurve des Kegelstumpfes ein Kreis ist.

7. Fahrzeugreifen nach Anspruch 5, **dadurch gekennzeichnet, dass** die Leitkurve des Kegelstumpfes eine Ellipse ist.

8. Fahrzeugreifen nach Anspruch 1, **dadurch gekennzeichnet, dass** zumindest einer der Ausschnitte ein Ausschnitt (6, 6', 7; 7') aus einer Mantelfläche eines Pyramidenstumpfes ist.

9. Fahrzeugreifen nach Anspruch 8, **dadurch gekennzeichnet, dass** der Ausschnitt (6, 6') durch diagonale Teilung eines Pyramidenstumpfes darstellbar ist.

10. Fahrzeugreifen nach Anspruch 8, **dadurch gekennzeichnet, dass** der Ausschnitt (7, 7') durch eine Teilung eines Pyramidenstumpfes, die abweichend von einer diagonalen Teilung ist, darstellbar ist.

11. Fahrzeugreifen nach Anspruch 10, **dadurch gekennzeichnet, dass** der Ausschnitt (7, 7') durch Abschneiden eines Pyramidenteiles parallel zu einer Kante der Grundfläche bildbar ist.

12. Fahrzeugreifen nach einem der vorangehenden Ansprüche, **dadurch gekennzeichnet, dass** bei den Einschnittflächen eines bestimmten Einschnittes die Ausschnitte aus den Mantelflächen spitzer Körper gleichartige Ausschnitte, insbesondere gleich ausgeführte Ausschnitte (4, 6, 7, 7') sind, die in alternierender Wölbungsorientierung zusammengesetzt sind.

13. Fahrzeugreifen nach einem der vorangehenden Ansprüche, **dadurch gekennzeichnet, dass** bei den Einschnittflächen eines bestimmten Einschnittes die Ausschnitte (4', 6') aus den Mantelflächen spitzer Körper von verschiedenen Körpern stammen, vorzugsweise von zwei verschiedenen Körpern.

14. Fahrzeugreifen nach Anspruch 3, **dadurch gekennzeichnet, dass** die Ausschnitte (4', 6') aus den Mantelflächen verschiedener Körper abwechselnd aufeinander folgen, sodass insbesondere keine gleichen oder gleichartigen Ausschnitte unmittelbar aufeinander folgen.

15. Fahrzeugreifen nach Anspruch 1, **dadurch gekennzeichnet, dass** die Scheitelwinkel der den Ausschnitten (4', 6') zu Grunde liegenden spitzen Körper an den Stoßlinien (5") der Ausschnitte (4', 6') übereinstimmen.
